# EUROPEAN PATENT APPLICATION

(11) **EP 2 308 284 A1**
(43) Date of publication of application: **13.04.2011**
(21) Application number: 10186844.6
(22) Date of filing: 07.10.2010
(51) Int. Cl.: A01G 25/16

(54) **Programmable drive and control assembly for a solenoid valve, in particular for irrigation systems**

(30) Priority: 12.10.2009 IT MI20090320 U
(71) Applicant: CLABER S.P.A., 33080 Fiume Veneto (IT)
(72) Inventor: Spadotto, Oliviano, 33170, PORDENONE (IT); Franchini, Gaetano, 33080, FIUME VENETO (PN) (IT); De Biasi, Roberto, 33170, PORDENONE (IT)
(74) Representative: Mittler, Enrico

(57) **Abstract**

A programmable drive and control assembly (2) for a solenoid valve, in particular for irrigation systems is described. The assembly (2) comprises a drive solenoid (7) for a hydraulic valve (1), a programmable electronic control device (10) for said solenoid (7), and a containment box (8, 23) for said solenoid (7) and said programmable electronic control device (10). The containment box (8, 23) comprises a box-like body (8) removably fixable to said hydraulic valve (1) and an at least partially transparent closing cover (23) screwed at the upper end of said box-like body (8) with the interposition of a fluid-tight annular gasket (25). The programmable electronic control device (10) is press-fitted into the upper end of said box-like body (8) below said cover (23) and comprises a resin body (11) for fluid-tightly accommodating an electronic circuitry (12) and at least one electric battery, a display (16) overlapping said electronic circuitry (12) and a transparent body (19), having a keyboard (20) overprinted by injection, overlapping said resin body and said display (16) The fluid-tight annular gasket (25) is accommodated in an annular conduit (26) of the upper end of the box-like body (8) so as to achieve a sealed side coupling with the closing cover (23). The box-like body (8) is fixable to the body (3) of the hydraulic valve (1) by means of screws (9).

## Description

The present invention concerns a programmable drive and control assembly for a solenoid valve, in particular for gardening irrigation systems.

Solenoid valves for irrigation systems are known, including a drive solenoid and a programmable electronic control device thereof, which allows an independent and programmable operation of the solenoid valve.

A solenoid valve of this a type is described in EP-A-1120593 and comprises a hydraulic valve and a programmable drive and control assembly for said valve which, in turn, comprises a drive solenoid, a programmable electronic control device, and a containment box for said solenoid and said programmable control device. The containment box consists of a box-like body screwed to the hydraulic valve body and of an at least partially transparent closing cover screwed at the upper end of said box-like body with the interposition of a fluid-tight annular gasket.

It was the object of the present invention to improve the construction of the drive and control assembly of the above-mentioned solenoid valve, with particular regard to the fluid tightness, so as to avoid water and moisture leakages within the containment box and within the electronic control device.

It was another object to achieve of a better fastening of the drive and control assembly to the hydraulic valve body.

A programmable drive and control assembly for a solenoid valve, in particular for irrigation systems, was therefore provided in accordance with the present invention, comprising a drive solenoid for a hydraulic valve, a programmable electronic control device for said solenoid, and a containment box for said solenoid and said programmable electronic control device, said containment box comprising a box-like body removably fixable to said hydraulic valve, and an at least partially transparent closing cover screwed at the upper end of said box-like body with the interposition of a fluid-tight annular gasket, characterized in that said programmable electronic control device is inserted into the upper end of said box-like body below said cover and comprises a resin body for fluid-tightly accommodating an electronic circuitry and at least one electric battery, a display overlapping said electronic circuitry and a transparent body, having an injection-overprinted keyboard, overlapping said resin body and said display.

Moreover, in a preferred embodiment, the aforesaid fluid-tight annular gasket is accommodated in an annular conduit of the upper end of the box-like body so as to achieve a sealed side coupling with said closing cover.

Fastening the box-like body to the valve body by means of a series of screws was also provided.

The features and advantages of the present invention will become apparent from the following detailed description of a preferred embodiment thereof, shown by way of non-limiting example in the accompanying drawings, in which:
Figure 1 shows a front view of a solenoid valve provided with a programmable drive and control assembly in accordance with the present invention;
Figure 2 shows a top plan view of the solenoid valve;
Figure 3 shows an axial section of the solenoid valve along line III-III of figure 2;
Figure 4 shows a cross section of the solenoid valve along line IV-IV of figure 2;
Figure 5 shows an exploded view of the solenoid valve in the previous figures;
Figure 6 shows a top plan view of the solenoid valve with the cover being removed;
Figure 7 shows a top plan view of the solenoid valve without cover and without the transparent body with overprinted keyboard.

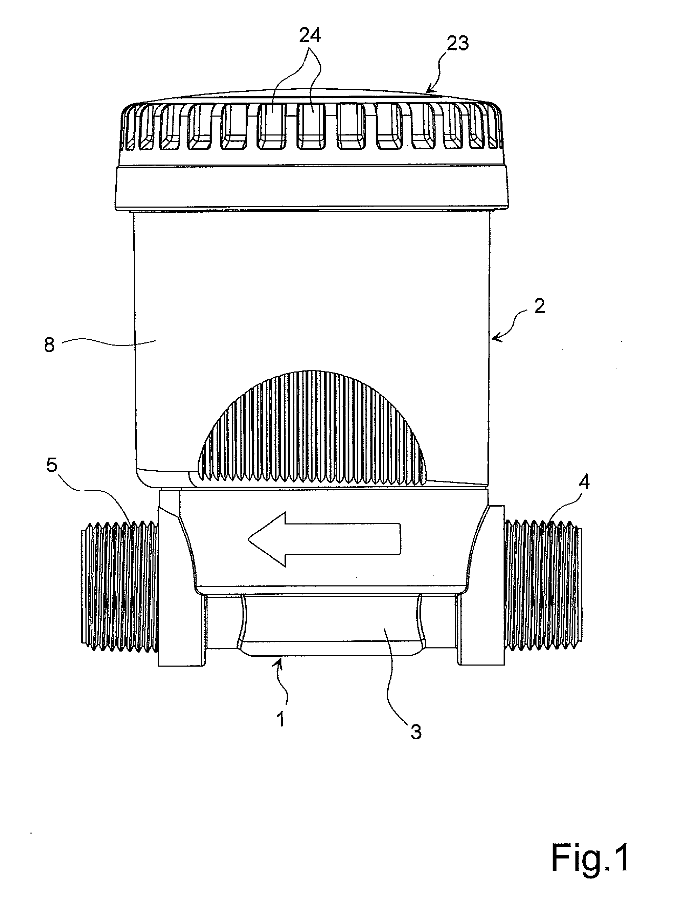

In figure 1 a solenoid valve is shown, particularly for an irrigation system, comprising a hydraulic valve 1 and an overlapping programmable drive and control assembly 2.

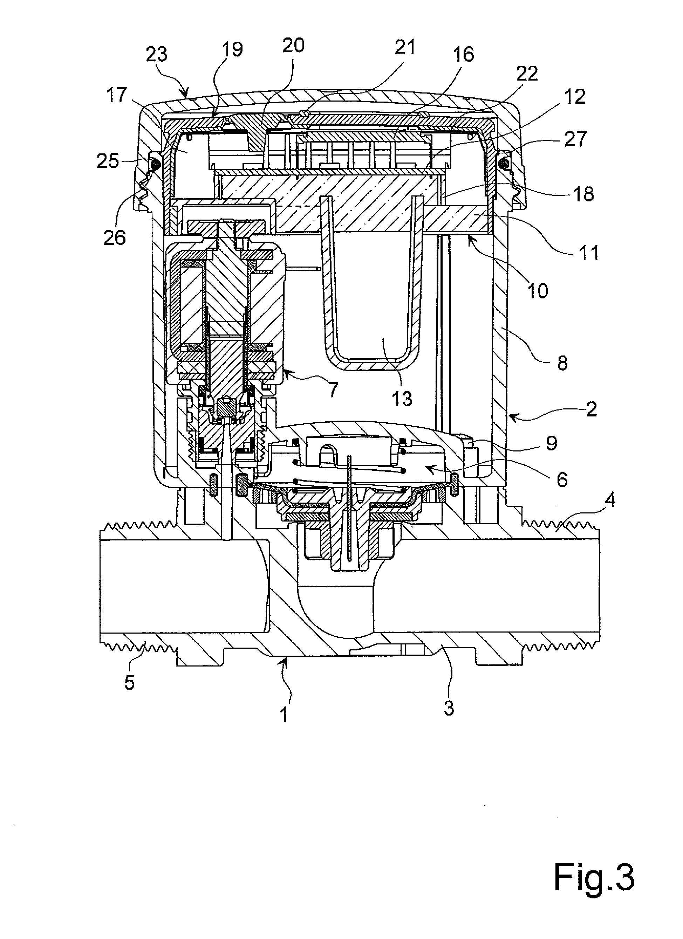

As shown in figure 3, hydraulic valve 2 comprises a valve body 3 with an inlet duct 4 and an outlet duct 5. The communication between the two ducts 4 and 5 is governed by a diaphragm valve element 6 which is, by way of example, of the type shown in EP-A-1120593 or in the Italian utility model application No. MI2009U000174, dated May 26th 2009, to which reference should be made for a detailed description of the structure and operation mode thereof. The employment of different valve elements, however, does not modify the claimed scope of the invention.

The operation of valve element 6 is provided by a bistable solenoid 7 which forms part of the programmable drive and control assembly 2. The solenoid shown is of the type described in the Italian utility model application No. MI2009U000174 dated May 26th 2009 cited above, to which reference should be made for a detailed description of the structure and operation mode thereof. The employment of a different type of solenoids, however, does not modify the claimed scope of the invention.

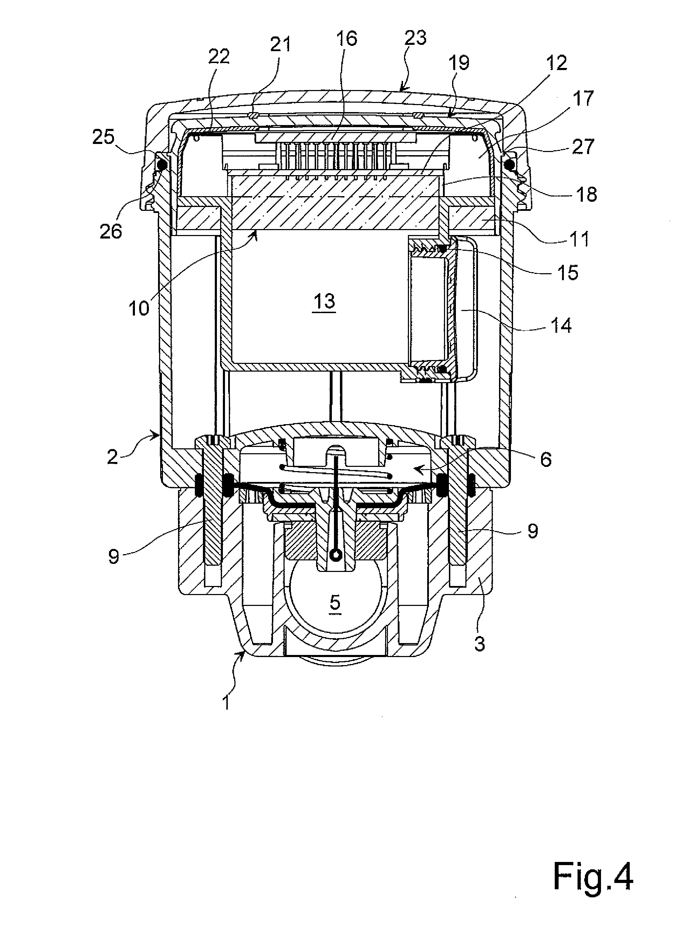

As shown in figures 3 and 4, solenoid 7 is accommodated within a box-like body 8, preferably made of suitable plastics, which is screwed to the valve body 3 by means of screws 9. The fastening operation by means of screws instead of the most common screwing has the advantage to make the reciprocal locking of the bodies 3 and 8 more secure and firm, even in case of failures or decays of the valve body or of the box-like body.

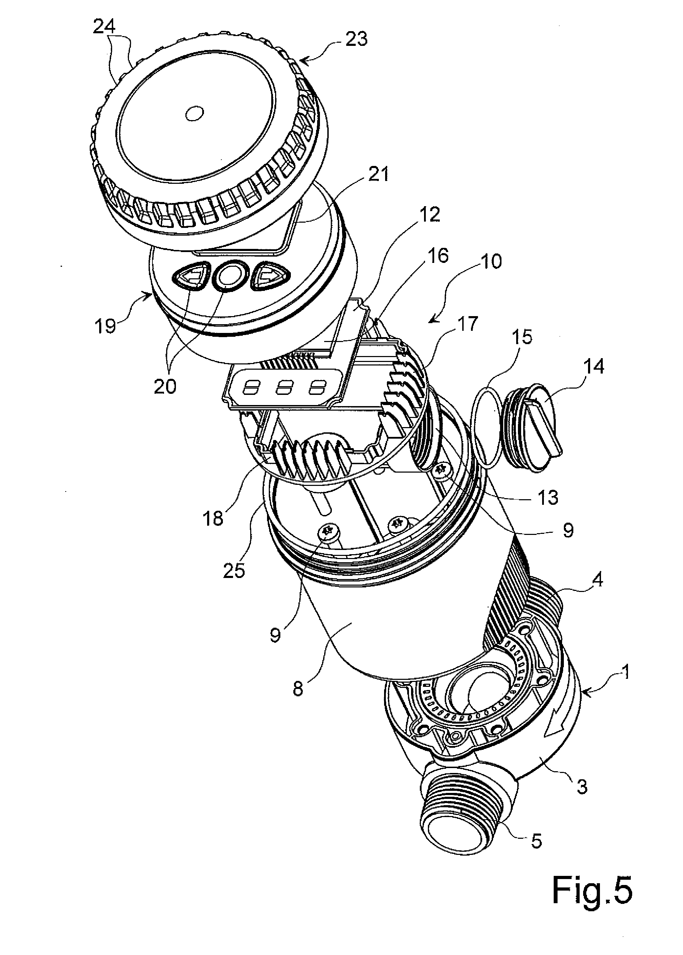

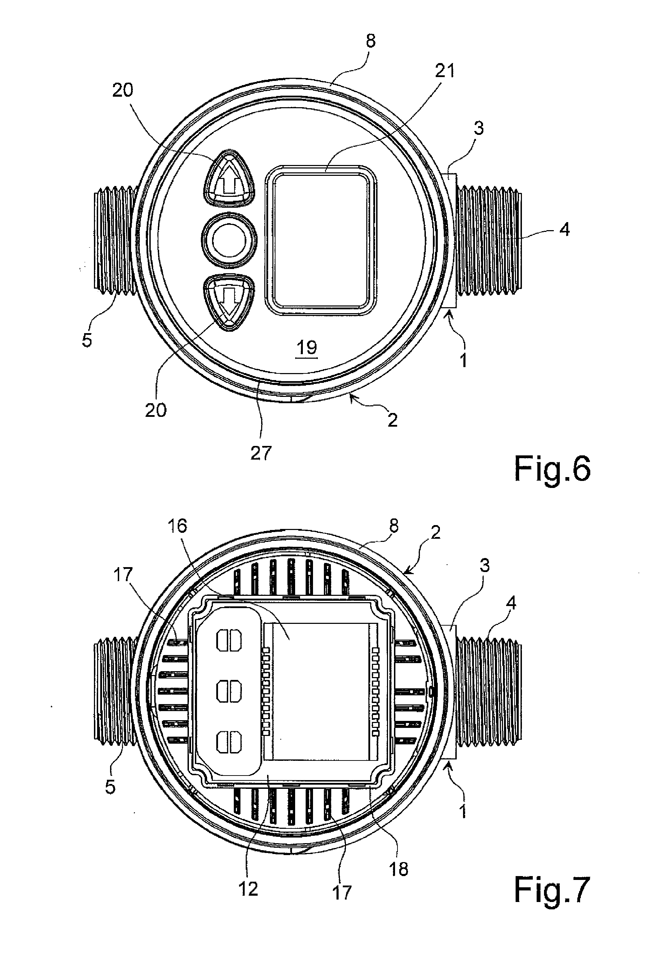

Into the upper end of the box-like body 8, a programmable electronic control device 10 is inserted, which, as also shown in figure 5, comprises a resin body 11 where an electronic circuitry overtopped by a printed circuit board 12 (seen in plan in figure 7) is fluid-tightly accommodated (in a concealed way), and which also seals an underlying compartment 13 for accommodating one or more electric batteries which may be introduced upon unscrewing a side closing lid 14 with a fluid-tight annular gasket 15 (figures 4 and 5).

A display 16 is placed above the printed circuit board 12 while, on the sides of board 12, a series of ribs 17 of a frame 18 extends upwards from the resin body 11, the ribs being intended to support a transparent body 19, preferably made of polycarbonate, which also surrounds resin body 11, printed circuit board 12 and display 16. Transparent body 19 carries a keyboard 20, overprinted by injection and having rubber key, and a frame 21 which defines a window for observing display 16. A thermoplastic rubber body 22, molded together with the transparent body 19, is interposed between the transparent body 19 and the ribs 17. A plan view of the transparent body 19 with keyboard 20 and frame 21 may be seen in figure 6.

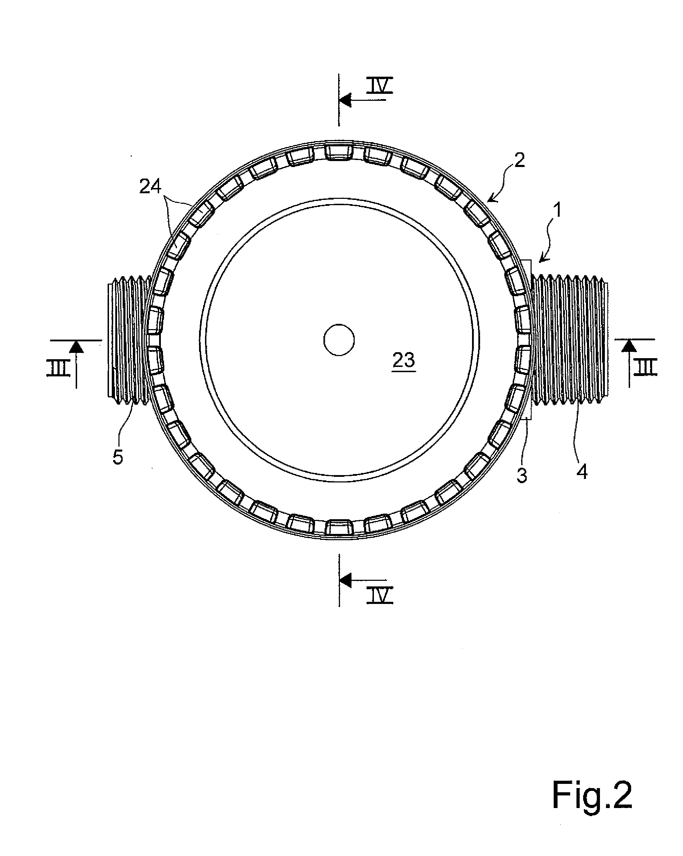

Box-like body 8 is closed at the top by a transparent cover 23, preferably made of polycarbonate, provided with notches 24 (figures 2 and 5), which is screwed outside the box-like body 8 with the interposition of a fluid-tight annular gasket 25, accommodated within a conduit 26 of the aforesaid upper end (figures 3 and 4). A side sealed coupling between the box-like body 8 and the cover 23 is thus achieved.

An annular exterior lip 27 is pressed between the mouth of the box-like body 8 and the cover 23 (figures 3 and 4).

Box-like body 8 and cover 23 form together a containment box for the programmable drive and control assembly 2 of the solenoid valve.

An overall exploded view of the solenoid valve, excluding solenoid 7 and valve element 6 due to drawing needs, may be seen in figure 5.

## Claims

1. A programmable drive and control assembly (2) for a solenoid valve, in particular for irrigation systems, comprising a drive solenoid (7) for a hydraulic valve (1), a programmable electronic control device (10) for said solenoid (7), and a containment box (8, 23) for said solenoid (7) and said programmable electronic control device (10), said containment box (8, 23) comprising a box-like body (8) removably fixable to said hydraulic valve (1) and an at least partially transparent closing cover (23) screwed to the upper end of said box-like body (8) with the interposition of a fluid-tight annular gasket (25), **characterized in that** said programmable electronic control device (10) is inserted into the upper end of said box-like body (8) below said cover (23) and comprises a resin body (1) for fluid-tightly accommodating an electronic circuitry (12) and at least one electric battery, a display (16) overlapping said electronic circuitry (12) and a transparent body (19), having a keyboard (20) overprinted by injection, overlapping said resin body (11) and said display (16)

2. A programmable drive and control assembly according to claim 1, **characterized in that** said fluid-tight annular gasket (25) is accommodated in an annular conduit (26) of the upper end of the box-like body (8) so as to achieve a sealed side coupling with said closing cover (23).

3. A programmable drive and control assembly according to claim 1, **characterized in that** said transparent body (19) is made of polycarbonate with overprinted rubber keys (20).

4. A programmable drive and control assembly according to claim 1 or 2, **characterized in that** said closing cover (23) is made of polycarbonate.

5. A programmable drive and control assembly according to any one of the preceding claims, **characterized in that** said box-like body (8) is fixable to the body (3) of said hydraulic valve (1) by means of screws (9).
